# EUROPÄISCHE PATENTANMELDUNG

(11) **EP 2 388 471 A1**
(43) Veröffentlichungstag der Anmeldung: **23.11.2011**
(21) Anmeldenummer: 10163528.2
(22) Anmeldetag: 21.05.2010
(51) Int. Cl.: F02P 7/03, H02M 5/257, G05F 1/20, H01F 29/02, H02M 7/06, H02P 13/06, G05F 1/455

(54) **Schaltungsanordnung zur Folgesteuerung von Leistungsstellern mit einem Verteilen von Zündimpulsen**

(71) Anmelder: AEG Power Solutions B.V., 1161 AH Zwanenburg (NL)
(72) Erfinder: Wallmeier, Peter, 59556 Lippstadt (DE); Paul, Wolfgang, 59581 Warstein-Belecke (DE)
(74) Vertreter: Fritz, Edmund Lothar

(57) **Zusammenfassung**

Die vorliegende Erfindung betrifft ein Mittel (13) zum Verteilen von Zündimpulsen, eine Schaltungsanordnung (10) zur Folgesteuerung von Leistungsstellern (20) mit einem solchen Mittel (13) zum Verteilen von Zündimpulsen und ein Verfahren zur Folgesteuerung von Leistungsstellern (20) zur Durchführung mit einer solchen Schaltungsanordnung (10).

Der Erfindung liegt das Problem zu Grunde, eine Schaltungsanordnung der vorgenannten Art und Komponenten für eine solche Schaltungsanordnung sowie ein Verfahren zum Betreiben der Schaltungsanordnung vorzuschlagen, die eine bessere Nutzung der Komponenten, insbesondere von Mitteln (12) zum Erzeugen von Zündimpulsen ermöglichen.

Dieses ist durch das erfindungsgemäße Mittel (13) zum Verteilen von Zündimpulsen bzw. eine erfindungsgemäße Schaltungsanordnung (10) mit diesem Mittel (13) möglich.

## Beschreibung

Die vorliegende Erfindung betrifft ein Mittel zum Verteilen von Zündimpulsen, Schaltungsanordnung zur Folgesteuerung von Leistungsstellern mit einem solchen Mittel zum Verteilen von Zündimpulsen und ein Verfahren zur Folgesteuerung von Leistungsstellern zur Durchführung mit einer solchen Schaltungsanordnung.

In verschiedenen Gebrauchsmusterschriften und Veröffentlichungen von Patentanmeldungen der AEG Power Solutions B.V., der AEG Power Solutions GmbH, der AEG Power Supply Systems GmbH o. a. sind Stromversorgungsanordnungen mit Leistungsstellern bekannt, die mit einer Folgesteuerung - auch als Spannungsfolgesteuerung bezeichnet - betrieben werden. Auch in dem Buch "Thyristorized Power Controllers" von G. K. Dubey, S. R. Doradla, A. Joshi und R. M. K. Sinha, ISBN 978-0-85226-190-3 werden solche Stromversorgungsanordnungen beschrieben.

Bei einer Stromversorgungsanordnung mit Leistungsstellern, die mit einer Folgesteuerung betrieben werden, ist im Regelfalle ein Transformator vorgesehen, der mehrere sekundärseitige Anzapfungen hat. Jede dieser Anzapfungen ist mit einem Eingang eines Leistungsstellers verbunden. Die Ausgänge der Leistungssteller sind in einer Sammelschiene zusammengeführt. Die Sammelschiene ist mit einem Ausgang der Stromversorgungsanordnung verbunden. Zwischen dem Ausgang der Stromversorgungsanordnung und einem Bezugspotenzial fällt dann eine Spannung ab, deren Effektivwert durch wenigstens einen Leistungssteller häufig aber durch zwei Leistungssteller eingestellt wird.

Durch einen Phasenanschnitt kann der Effektivwert der Spannung am Ausgang jedes Leistungsstellers eingestellt werden. Aufgrund der Verbindung der Eingänge der Leistungssteller mit unterschiedlichen sekundärseitigen Anzapfungen des Transformators unterscheiden sich die Effektivwerte der maximalen, am Ausgang der Leistungssteller bereitstellbaren Spannungen. Theoretisch ist es möglich, mit dem Leistungssteller, dessen Eingang mit der Anzapfung des Transformators verbunden ist, in dem die höchste Spannung bereitgestellt wird, Spannungen in dem gesamten Spannungsbereich zwischen 0 V und der maximalen Spannung einzustellen. Praktisch stößt das allerdings auf Schwierigkeiten. Außerdem erhält man dann hohe Spannungssprünge, die zu starken Oberschwingungen führen, was den Leistungsfaktor der Stromversorgungsanordnung mindert. Aus diesem Grund wird bei der Folgesteuerung zum Einstellen einer Spannung zwischen den Spannungsniveaus von zwei Anzapfungen des Transformators der eine Leistungssteller während der vollständigen Halbwelle der Netzspannung durchgeschaltet, während der andere Leistungssteller entsprechend einem Steuerwinkel mit einem Phasenanschnitt betrieben wird. Daher sind bei einer derartigen Stromversorgung sehr häufig zwei Leistungssteller in Betrieb.

Bei den bisher bekannten Stromversorgungsanordnungen ist jedem Leistungssteller ein Mittel zum Erzeugen eines Zündimpulses zugeordnet. Jedes Mittel zum Erzeugen des Zündimpulses ist mit einem Steuer- und/oder Regelmittel verbunden. In dem Steuer-und/oder Regelmittel wird entsprechend der am Ausgang der Stromversorgungsanordnung gewünschten Spannung ermittelt, welcher beziehungsweise welche der Leistungssteller betrieben werden muss bzw. müssen, um diese Spannung einzustellen. Dabei wird auch der Steuerwinkel ermittelt, den der Leistungssteller einstellen muss, der eingangsseitig mit der höheren Spannungspotential verbunden ist.

Bei der Stromversorgungsanordnung mit Leistungsstellern, die in einer Folgesteuerung betrieben werden, im Regelfalle nur zwei Leistungssteller in Betrieb sind, ist während des Betriebs einer solchen Stromversorgungsanordnung eine Vielzahl von Komponenten, insbesondere eine Vielzahl der Mittel zum Erzeugen von Zündimpulsen ungenutzt.

Die Verbindung zwischen dem Steuer- und/oder Regelmittel und dem Mittel zum Erzeugen der Zündimpulse erfolgt über einen Bus. Ein häufig verwendeter Bus hat eine Bandbreite von 16 Bit, d. h. es können Datenwörter mit einer Breite von 16 Bit übertragen werden. Mit einem Datenwort, dass über den Bus gesendet wird, ist es also möglich, 2¹⁶ verschiedene Zustände darzustellen oder - wie man häufig sagt - zu adressieren. Das wurde in der Vergangenheit so genutzt, dass jedem Leistungssteller der Stromversorgungsanordnung ein Abschnitt in dem adressierbaren Raum zugewiesenen wurde. Jedem Zustand in einem Abschnitt des adressierbaren Raums wurde ferner ein Steuerwinkel zugewiesen. Wenn nun also ein Datenwort von dem Steuer- und/oder Regelmittel auf den Bus gegeben wurde, wurde gleichzeitig für alle Leistungssteller der an ihnen einzustellende Steuerwinkel auf den Bus gegeben. In jedem Mittel zum Erzeugen von Zündimpulsen wurde der Abschnitt des Datenwortes ausgewertet, der die Information zu dem Steuerwinkel des ihm nachgeschalteten Leistungsstellers enthielt.

Diese Art und Weise der Übertragung der Steuerwinkelinformationen führte dazu, dass beispielsweise bei einer Wortbreite von 16 Bit insgesamt 65536 Zustände dargestellt werden können. In einer Stromversorgungsanordnung mit vier Leistungsstellern wird jedem Leistungssteller ein Abschnitt von 4 Bits zugewiesen. Es können jedem Leistungssteller 2⁴=16 Zustände zugeordnet werden. Liegen die einstellbaren Steuerwinkel zwischen 0 und 180° ist eine Auflösung von 181 °:16=11,313° möglich. Die Auflösung wird bei größeren und realistischeren Wortbreiten besser. Das Beispiel zeigt aber, wie die Auflösung ermittelt werden kann.

Die Auflösung verschlechtert sich, wenn die Stromversorgungsanordnung mehr Leistungssteller aufweist. Eine hohe Anzahl von Leistungsstellern kann jedoch notwendig sein, wenn große Spannungshübe eingestellt werden sollen. Eine hohe Anzahl von Leistungsstellern kann auch dann von Vorteil sein, wenn der Leistungsfaktor erhöht werden soll. Die Spannungshübe, die dann von jedem einzelnen Leistungssteller vollzogen werden, können durch eine hohe Anzahl von Leistungsstellern reduziert werden. Der Anteil der Oberschwingungen lässt sich reduzieren, je kleiner der von den einzelnen Leistungsstellern abgedeckte Spannungsbereich ist.

Hier setzt die vorliegende Erfindung an.

Der Erfindung liegt das Problem zu Grunde, eine Schaltungsanordnung der vorgenannten Art und Komponenten für eine solche Schaltungsanordnung sowie ein Verfahren zum Betreiben der Schaltungsanordnung vorzuschlagen, die eine bessere Nutzung der Komponenten, insbesondere der Mittel zum Erzeugen von Zündimpulsen und eine höhere Auflösung ermöglichen.

Das der Erfindung zu Grunde liegende Problem wird zunächst durch eine neue Komponente für eine Schaltungsanordnung angegangen. Erfindungsgemäß wird ein Mittel zum Verteilen von Zündimpulsen vorgeschlagen. Das Mittel zum Verteilen von Zündimpulsen hat die Funktion, die von wenigstens einem Mittel zum Erzeugen von Zündimpulsen erzeugten Zündimpulse auf die Leistungssteller der Stromversorgungsanordnung zu verteilen. Dazu ist das erfindungsgemäße Mittel zum Verteilen von Zündimpulsen
- mit wenigstens zwei Eingängen zur Verbindung mit dem wenigstens einen Mittel zum Erzeugen von Zündimpulsen,
- mit einer Schnittstelle zur Verbindung mit einem Steuer-und/oder Regelmittel und
- mit wenigstens drei Ausgängen zur Verbindung mit Leistungsstellern ausgestattet,
wobei das Mittel zum Verteilen von Zündimpulsen steuerbare Elemente zum Verbinden jedes der wenigstens zwei Eingänge mit einem der drei Ausgänge in Abhängigkeit von wenigstens einer an der Schnittstelle anliegenden Auswahlinformation aufweist.

Das erfindungsgemäße Mittel zum Verteilen von Zündimpulsen wird in einer erfindungsgemäßen Schaltungsanordnung zur Folgesteuerung von Leistungsstellern eingesetzt, wobei eine erfindungsgemäße Schaltungsanordnung
- mit einem Steuer- und/oder Regelmittel, wobei das Steuer-und/oder Regelmittel wenigstens eine Schnittstelle aufweist, an der Auswahlinformationen und Steuerwinkelinformationen bereitstellbar sind, wobei eine Steuerwinkelinformation angibt, mit welchem Steuerwinkel einer der Leistungssteller zu betreiben ist, und eine Auswahlinformation angibt, welcher der Leistungssteller mit dem vorgenannten Steuerwinkel zu betreiben ist, und
- mit wenigstens einem Mittel zum Erzeugen von Zündimpulsen ausgestattet ist, wobei das Mittel zum Erzeugen von Zündimpulsen eine Schnittstelle hat, über welche wenigstens eine der Steuerwinkelinformationen in das Mittel zum Erzeugen von Zündimpulsen einlesbar ist, und wenigstens einen Ausgang hat, an dem entsprechend der wenigstens einen Steuerwinkelinformation ein Zündimpuls bereitstellbar ist.

Bei einer erfindungsgemäßen Schaltungsanordnungen ist nicht jedem Leistungssteller, der über die Schaltungsanordnung gesteuert werden kann, ein Mittel zum Erzeugen von Zündimpulsen zugeordnet. Die Anzahl der Mittel zum Erzeugen von Zündimpulsen ist vielmehr kleiner als die Anzahl der Leistungssteller, die an die Schaltungsanordnung angeschlossen werden können. Die von den wenigen Mitteln zum Erzeugen von Zündimpulsen erzeugten Zündimpulse werden durch das erfindungsgemäße Mittel zum Verteilen der Zündimpulse auf die Leistungssteller verteilt. Welcher der Leistungssteller mit dem von den Mitteln zum Erzeugen von Zündimpulsen erzeugten Zündimpulse versorgt werden soll, ergibt sich aus der an der Schnittstelle des Mittels zum Verteilen von Zündimpulsen anliegenden Auswahlinformation, die von dem Steuer- und/oder Regelmittel erzeugt wird.

Die erfindungsgemäße Schaltungsanordnung kann erfindungsgemäß so betrieben werden, dass die Auswahlinformationen und die Steuerwinkelinformationen, die einerseits an das Mittel zum Verteilen von Zündimpulsen und andererseits an das wenigstens eine Mittel zum Erzeugen von Zündimpulsen gegeben werden, in einem Datenwort kodiert werden. Für die Kodierung der Auswahlinformationen ist ein Abschnitt des Datenworts notwendig, der nur eine sehr geringe Breite hat. Ist eine erfindungsgemäße Schaltungsanordnung zur Verbindung mit vier Leistungsstellern vorgesehen, hat der Abschnitt, in dem die Auswahlinformationen kodiert werden eine Breite von 2 Bits. Von den 16 Bits des Datenworts verbleiben dann 14 Bits für Steuerwinkelinformationen. Da im Normalfall nur zwei Leistungssteller gleichzeitig betrieben werden, müssen nur zwei Steuerwinkelinformationen übertragen werden. Für die Übertragung jeder der beiden Steuerwinkelinformationen verbleiben dann 7 Bits. Mit diesen 7 Bits können 128 Zustände dargestellt werden. Das führt zu einer Auflösung von 181 °:128=1,414. Bei gleicher Wortlänge des zu übertragenden Datenworts und bei gleicher Anzahl von Leistungsstellern kann also eine deutlich größere Auflösung und somit eine deutlich feinere Einstellung der Leistungssteller erreicht werden.

Die steuerbaren Elemente eines erfindungsgemäßen Mittels zum Verteilen von Zündimpulsen können zum Verbinden steuerbare Schalter, insbesondere Transistoren aufweisen. Ein erfindungsgemäßes Mittel zum Verteilen von Zündimpulsen kann einen Schaltkreis aufweisen, der mit der Schnittstelle und Steueranschlüssen der Elemente zum Verbinden verbunden ist. Der Schaltkreis, der ein integrierter Schaltkreis sein kann, kann zum Umsetzen der Auswahlinformationen in Signale zum Ansteuern der gesteuerten Schaltelemente sein.

Mit dem Steuer- und/oder Regelmittel einer erfindungsgemäßen Schaltungsanordnung können höchstens zwei Leistungssteller auswählbar sein, deren Auswahl als Auswahlinformationen an der Schnittstelle bereitstellbar sind. Mit dem Steuer- und/oder Regelmittel können ebenfalls höchstens zwei Steuerwinkel festlegbar sein, die als Steuerwinkelinformationen an der Schnittstelle bereitgestellt werden. Das Mittel zum Erzeugen von Zündimpulsen kann wenigstens zwei Ausgänge haben, an denen entsprechend der beiden Steuerwinkelinformationen jeweils ein Zündimpuls bereitgestellt wird. Alternativ können zwei Mittel zum Erzeugen von Zündimpulsen mit jeweils einem Ausgang vorgesehen sein.

Die Schnittstellen des Steuer- und/oder Regelmittels, des Mittels zum Erzeugen von Zündimpulsen und des Mittels zum Verteilen von Zündimpulsen einer erfindungsgemäßen Schaltungsanordnung können über einen Bus miteinander verbunden sein. Der Bus kann ein Bus gemäß IEC 61158 bzw. IEC 61784 sein (PROFIBUS).

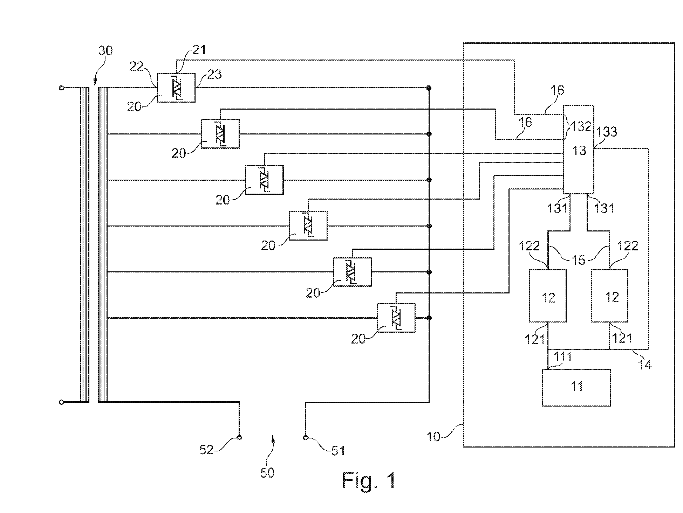

Weitere Merkmale und Vorteile einer erfindungsgemäßen Schaltungsanordnung werden aus der Beschreibung eines Ausführungsbeispiels der Erfindung deutlich. Das Ausführungsbeispiel ist in der Zeichnung dargestellt. Darin zeigt
- Fig. 1: ein vereinfachtes Schaltbild einer Stromversorgungsanordnung mit erfindungsgemäßer Schaltungsanordnung.

Die in der Figur 1 dargestellte erfindungsgemäße Stromversorgungsanordnung umfasst neben der erfindungsgemäßen Schaltungsanordnung 10 eine Reihe von Leistungsstellern 20, die von der Schaltungsanordnung 10 angesteuert werden. Die Leistungssteller 20 weisen Eingänge 22 auf, die mit sekundärseitigen Anzapfungen eines Transformators 30 verbunden sind. Die Primärseite des Transformators 30 ist mit einem Wechselstromnetz verbunden. Die Leistungssteller 20 weisen ferner Ausgänge 23 auf, die in einer Sammelschiene 40 zusammengeführt sind. Die Sammelschiene 40 ist mit einem Anschluss 51 eines Ausgangs 50 der Stromversorgungsanordnung verbunden. Ein zweiter Anschluss 52 des Ausgangs 50 der Stromversorgungsanordnung ist mit einer sekundärseitigen Anzapfung des Transformators 30 verbunden, die auf dem Bezugspotential der Stromversorgungsanordnung liegt.

Die Leistungssteller 20 können auf bekannte Art und Weise in Folgesteuerung betrieben werden. Die erfindungsgemäße Schaltungsanordnung 10 ist zum Betreiben der Leistungssteller 20 in Folgebesteuerung vorgesehen. Jeder der Leistungssteller weist einen Steueranschluss 21 auf, der dazu mit der erfindungsgemäßen Schaltungsanordnung 10 verbunden ist. Über die Steueranschlüsse 21 werden Zündimpulse zu den Leistungsstellern 20 gegeben.

Die Zündimpulse werden in der erfindungsgemäßen Schaltungsanordnung 10 erzeugt. Die Zeitpunkte an denen Zündimpulse ausgegeben werden, und die Leistungssteller 20, an die Zündimpulse gegeben werden, werden durch ein Steuer- und/oder Regelmittel 11 der erfindungsgemäßen Schaltungsanordnung 10 vorgegeben. Die Zeitpunkte, an denen die Zündimpulse ausgegeben werden, werden durch Steuerwinkel bestimmt, die in dem Steuer-und/oder Regelmittel 11 ermittelt werden. Da bei einer Folgesteuerung im Regelfall maximal zwei Leistungssteller 20 im Betrieb sind, ist es nur notwendig, gleichzeitig zwei Steuerwinkel zu bestimmen. Die beiden Steuerwinkel werden in Steuerwinkelinformationen kodiert. Die Leistungssteller 20, an die Zündimpulse gegeben werden, werden durch das Steuer- und/oder Regelmittel 11 ausgewählt und in Auswahlinformationen kodiert. Die Auswahlinformationen und die Steuerwinkelinformationen werden in einem Datenwort zusammengefasst. Ein erster Abschnitt des Datenworts enthält die Auswahlinformationen und ein zweiter Abschnitt des Datenworts enthält die Steuerwinkelinformationen. Das Steuer- und/oder Regelmittel 11 ist über eine Schnittstelle 111 mit einem Bus 14 verbunden. Das Datenwort wird über den Bus 14 gesendet.

Neben der Verbindung zur Schnittstelle 111 des Steuer- und/oder Regelmittels 11 weist der Bus 14 Verbindungen zu Schnittstellen 121 von zwei Mitteln 12 zum Erzeugen von Zündimpulsen und zu einer Schnittstelle 133 von einem Mittel 13 zum Verteilen von Zündimpulsen auf.

In den Mitteln 12 zum Erzeugen von Zündimpulsen werden die beiden Steuerwinkelinformationen, die in dem über den Bus 14 gesendeten Datenwörtern enthalten sind, dekodiert und in Zündimpulse umgesetzt, die zum Zünden der von dem Steuer- und/oder Regelmittel 11 ausgewählten Leistungssteller 20 vorgesehen sind. Die Zündimpulse werden an Ausgängen 122 der Mittel 12 zum Erzeugen von Zündimpulsen bereitgestellt und über Leitungen 15 auf Eingänge 131 an das Mittel 13 zum Verteilen von Zündimpulsen gegeben.

Das Mittel 13 zum Verteilen von Zündimpulsen weist neben den Eingängen 131 Ausgänge 132 auf, die mit den Steuerleitungen 16 zu den Steueranschlüssen 21 der Leistungssteller 20 verbunden sind. Durch ein Verbinden der Eingänge 131 mit einem der Ausgänge 132 kann der an dem Eingang 131 anstehende Zündimpuls zum Ausgang 132 und dann über die mit diesem Ausgang 132 verbundene Steuerleitung 16 zu dem mit dieser Steuerleitung 16 verbundenen Leistungssteller 20 geleitet werden.

In dem Mittel 13 zum Verteilen von Zündimpulsen sind steuerbare Elemente (nicht dargestellt) zum Verteilen der Zündimpulse vorgesehen. Diese können durch steuerbare Schaltmittel, z.B. Transistoren bereitgestellt werden. Wie die gesteuerten Elemente zum Verteilen der Zündimpulse die Zündimpulse auf die Ausgänge 132 verteilen, ergibt sich aus den Auswahlinformationen, die das Mittel 13 zum Verteilen von Zündimpulsen über die Schnittstelle 133, die mit dem Bus 14 verbunden ist, aus dem auf dem Bus 14 gesendeten Datenwort entnehmen kann. Das Mittel 13 zum Verteilen von Zündimpulsen kann dazu die in dem Datenwort kodierten Auswahlinformationen dekodieren und entsprechend der Auswahlinformationen die Eingänge 131 mit den Ausgängen 132 verbinden. Die dazu vorgesehenen gesteuerten Schaltelemente werden entsprechend zum Schließen oder zum Öffnen angesteuert, wodurch Verbindungen zwischen den Eingängen 131 und den Ausgängen 132 geschaffen oder unterbrochen werden. Jeder der Eingänge 131 ist über ein steuerbares Schaltelement mit jedem der Ausgänge 132 verbindbar.

## Patentansprüche

1. Mittel (13) zum Verteilen von wenigstens einem Mittel (12) zum Erzeugen von Zündimpulsen erzeugten Zündimpulsen,
- mit wenigstens zwei Eingängen (131) zur Verbindung mit dem wenigstens einen Mittel (12) zum Erzeugen von Zündimpulsen,
- mit einer Schnittstelle (133) zur Verbindung mit einem Steuer- und/oder Regelmittel (11) und
- mit wenigstens drei Ausgängen (132) zur Verbindung mit Leistungsstellern (20),
- wobei das Mittel (12) zum Verteilen von Zündimpulsen steuerbare Elemente zum Verbinden jedes der wenigstens zwei Eingänge (131) mit einem der drei Ausgänge (132) in Abhängigkeit von wenigstens einer an der Schnittstelle (133) anliegenden Auswahlinformation aufweist.

2. Mittel (13) nach Anspruch 1 , **dadurch gekennzeichnet, dass** die steuerbaren Elemente zum Verbinden steuerbare Schalter, insbesondere Transistoren sind.

3. Mittel (13) nach Anspruch 1 oder 2, **dadurch gekennzeichnet, dass** das Mittel (13) zum Verteilen von Zündimpulsen einen Schaltkreis aufweist, der mit der Schnittstelle (133) und Steueranschlüssen der Elemente zum Verbinden verbunden ist.

4. Schaltungsanordnung (10) zur Folgesteuerung von Leistungsstellern (20)
- mit einem Steuer- und/oder Regelmittel (11), wobei das Steuer- und/oder Regelmittel (11) wenigstens eine Schnittstelle (111) aufweist, an der Auswahlinformationen und Steuerwinkelinformationen bereitstellbar sind, wobei eine Steuerwinkelinformation angibt, mit welchem Steuerwinkel einer der Leistungssteller (20) zu betreiben ist, und eine Auswahlinformation angibt, welcher der Leistungssteller (20) mit dem vorgenannten Steuerwinkel zu betreiben ist, und
- mit wenigstens einem Mittel (12) zum Erzeugen von Zündimpulsen, wobei das Mittel (12) zum Erzeugen von Zündimpulsen eine Schnittstelle (121), über welche wenigstens eine der Steuerwinkelinformationen in das Mittel (12) zum Erzeugen von Zündimpulsen einlesbar ist, und wenigstens einen Ausgang (122) hat, an dem entsprechend der wenigstens einen Steuerwinkelinformation ein Zündimpuls bereitstellbar ist,
**dadurch gekennzeichnet, dass**
- die Schaltungsanordnung (10) ein Mittel (13) zum Verteilen von Zündimpulsen nach einem der Ansprüche 1 bis 3 aufweist.

5. Schaltungsanordnung (10) nach Anspruch 4, **dadurch gekennzeichnet, dass** mit dem Steuer- und/oder Regelmittel (11) höchstens zwei Leistungssteller (20) auswählbar sind, deren Auswahl als Auswahlinformationen an der Schnittstelle (111) bereitstellbar sind.

6. Schaltungsanordnung (10) nach Anspruch 5, **dadurch gekennzeichnet, dass** mit dem Steuer- und/oder Regelmittel (11) höchstens zwei Steuerwinkel festlegbar sind, die als Steuerwinkelinformationen an der Schnittstelle (111) bereitstellbar sind.

7. Schaltungsanordnung (10) nach Anspruch 6, **dadurch gekennzeichnet, dass** das Mittel (12) zum Erzeugen von Zündimpulsen zwei Ausgänge (122) hat, an denen entsprechend der beiden Steuerwinkelinformation jeweils ein Zündimpuls bereitstellbar ist.

8. Schaltungsanordnung (10) nach einem der Ansprüche 1 bis 7, **dadurch gekennzeichnet, dass** die Schnittstellen (1 1 1 , 1 21 , 133) des Steuer- und/oder Regelmittels (11), des wenigstens einen Mittels (12) zum Erzeugen von Zündimpulsen und des Mittels (13) zum Verteilen von Zündimpulsen über einen Bus (14) miteinander verbunden sind.

9. Verfahren zur Folgesteuerung von Leistungsstellern (20), **dadurch gekennzeichnet, dass** das Verfahren mit einer Schaltungsanordnung (10) nach einem der Ansprüche 4 bis 8 durchgeführt wird.

10. Verfahren nach Anspruch 9, **dadurch gekennzeichnet, dass** die Auswahlinformationen und die Steuerwinkelinformationen von dem Steuer- und/oder Regelmittel (11) in einem Datenwort über die Schnittstelle (111) auf einen Bus (14) gegeben werden, wobei das Datenwort einen ersten Abschnitt für die Auswahlinformationen und einen zweiten Abschnitt für die Steuerwinkelinformationen hat.
